# EUROPEAN PATENT APPLICATION

(11) **EP 4 714 693 A1**
(43) Date of publication of application: **25.03.2026**
(21) Application number: 25201783.5
(22) Date of filing: 12.09.2025
(51) Int. Cl.: B60H 1/00

(54) **MOTOR VEHICLE WITH A CONDITIONING CIRCUIT HAVING A HEAT EXCHANGER WITH A PHASE CHANGE MATERIAL**

(30) Priority: 18.09.2024 IT 202400020803
(71) Applicant: FERRARI S.p.A., 41100 Modena (IT)
(72) Inventor: MOSCARDI, Andrea, 41100 MODENA (IT); BALLATORE, Marco, 41100 MODENA (IT); VARI', Francesco, 41100 MODENA (IT)
(74) Representative: Studio Torta S.p.A.

(57) **Abstract**

Motor vehicle comprising a first conditioning circuit (101) configured to cyclically circulate a first conditioning fluid along a first path (102) in a closed loop, the first conditioning circuit (101) comprising on the first path (102), a first heat exchanger (103) configured to expose the first conditioning fluid to a first heat exchange with a second conditioning fluid external to the first conditioning circuit (101), and a second heat exchanger (105) comprising a material confined in a closed thermodynamic system, arranged to make thermal contact with the first conditioning fluid and adapted to switch between a solid phase and a liquid phase only when a temperature of the first conditioning fluid in thermal contact with the material satisfies a relationship with a phase change threshold, thus resulting in a second heat exchange between the material and the first conditioning fluid based on a latent heat of the material.

## Description

### CROSS-REFERENCE TO RELATED APPLICATIONS

This patent application claims priority from Italian patent application no. 102024000020803 filed on September 18, 2024, the entire disclosure of which is incorporated herein by reference.

### BACKGROUND

The invention relates generally to a motor vehicle and more in particular to a conditioning circuit thereof.

### PRIOR ART

It is common knowledge that motor vehicles may include one or more conditioning circuits to condition the air in the passenger compartment or for cooling of components that generate heat during use, such as batteries for example, in particular in the case of hybrid electric or fully electric vehicles.

The conditioning circuits can circulate fluids that do not substantially change phase during their cyclic path, as in the case of the common circuits for cooling a powertrain of the vehicle, wherein, for example, a liquid cooling fluid circulates (engine cooling water), or can include the typical components for obtaining a refrigeration cycle, as in the case of the air conditioning circuit for the air in the passenger compartment, wherein a refrigerant fluid that changes phase during the cycle circulates, where the typical components include, in detail, at least one compressor, a condenser, an expansion valve, and an evaporator.

In certain cases, the refrigerant fluid of the refrigeration cycle can be used in an evaporator to cool the further refrigerant fluid that does not change phase on its path.

Although they are generally satisfactory, the known conditioning circuits of motor vehicles have drawbacks, so an improvement is being sought.

For example, a first rather general drawback can consist of the fact that the components of the cooling circuits must be oversized in order to function efficiently even in conditions of thermal load peak, although these conditions occur with a much lower frequency than conditions of average thermal load.

A further drawback, this time much more specific and typical of the refrigeration cycles of a motor vehicle for conditioning of the passenger compartment, occurs when the refrigeration cycle operates in low load conditions for lengthy periods (low compressor flow rate).

In this case, the compressor can enter into surge conditions that require an emergency intervention on the conditioning circuit, in order to avoid irreversible damage to the compressor.

The emergency intervention may typically consist of opening a bypass line in parallel with the compressor and which forms respective nodes upstream and downstream of the compressor, with a point immediately upstream thereof, or of implementing a strategy of switching on and switching off the compressor at regular intervals and in an alternate sequence, with a clear inefficiency and overall inefficacy of the conditioning circuit in both circumstances.
In light of the above, there is a need to address at least one of the drawbacks mentioned.

An object of the invention is to respond to this need, preferably in a simple and repeatable way.

### DESCRIPTION OF THE INVENTION

The object is achieved by a motor vehicle as defined in claim 1.

The dependent claims define particular embodiments of the invention.

### BRIEF DESCRIPTION OF THE DRAWINGS

An embodiment of the invention is described below for a better understanding of it, by way of non-limiting example and with reference to the appended drawings, wherein:
- Figure 1 is a perspective view of a motor vehicle comprising a conditioning apparatus according to the invention;
- Figure 2 is a schematic section of a heat exchanger of the conditioning apparatus,
- Figure 3 is a detailed enlargement of a zone of the heat exchanger of Figure 2 provided with fins depicted schematically,
- Figures 4 and 5 are schematic sections depicting respective construction alternatives of the heat exchanger of Figure 2,
- Figures 6 and 7 are block diagrams that depict the arrangement of the components of respective variants of the conditioning apparatus, according to an embodiment of the invention,
- Figures 8 and 9 are block diagrams that depict the arrangement of the components of respective variants of the conditioning apparatus, according to a further embodiment of the invention,
- Figure 10 is a block diagram that depicts the arrangement of the components of the conditioning apparatus, according to a further embodiment of the invention,
- Figure 11 is a graph with axes respectively representing the flow rate and the compression ratio of a compressor of the conditioning apparatus, on which a surge line is shown,
- Figure 12 is a graph that shows the time trend of a temperature of a component or zone of the motor vehicle upon applying an anti-surge control strategy on the compressor according to the prior art, when the conditioning apparatus includes a heat exchange element to condition the component or zone, and
- Figure 13 is a similar graph to the one of Figure 12, but relating to the application of an anti-surge control strategy on the compressor practicable by means of the conditioning apparatus according to the invention.

### EMBODIMENTS OF THE INVENTION

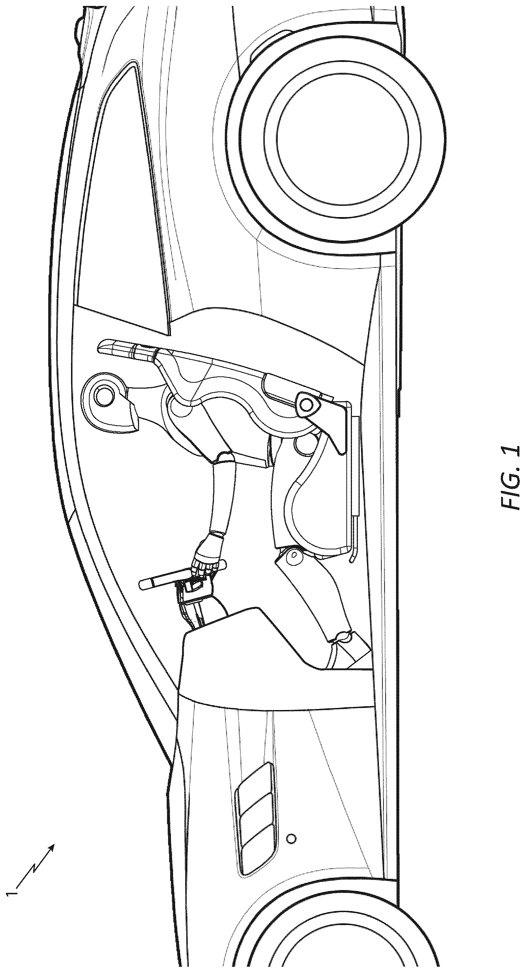

In Figure 1, the number 1 is used to indicate, in its entirety, a vehicle, specifically a motor vehicle, in particular a sports car or a racing car.

The motor vehicle 1 comprises at least one passenger compartment (not shown) to accommodate a driver and possibly one or more passengers.

Furthermore, the motor vehicle 1 could also comprise a plurality of devices U, including, for example, one or more electric devices, a powertrain, and similar devices, which generate heat during their functioning and therefore need to be cooled.

Without thus losing the general nature, examples of electric devices can be an electric powertrain, power electronics elements, a control unit, condensers, batteries, and similar.

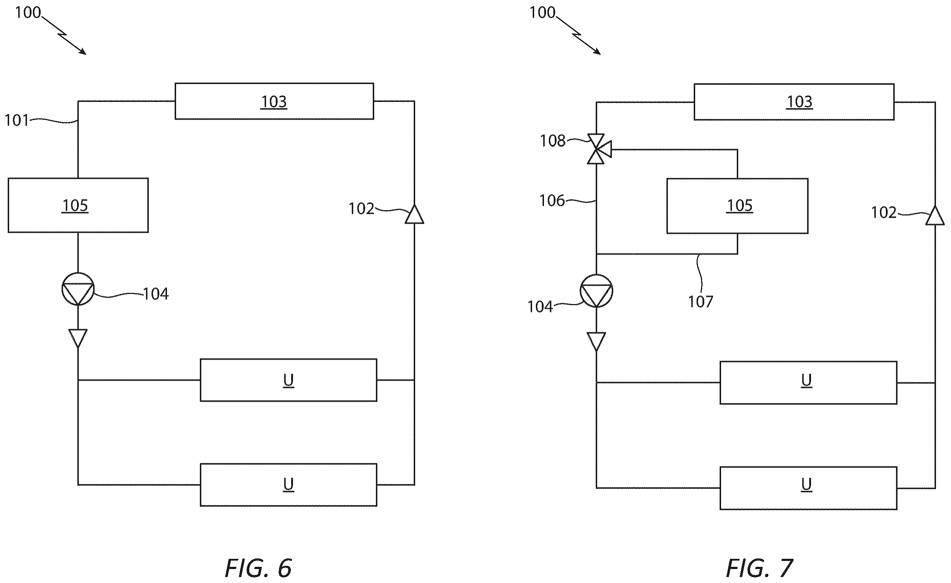

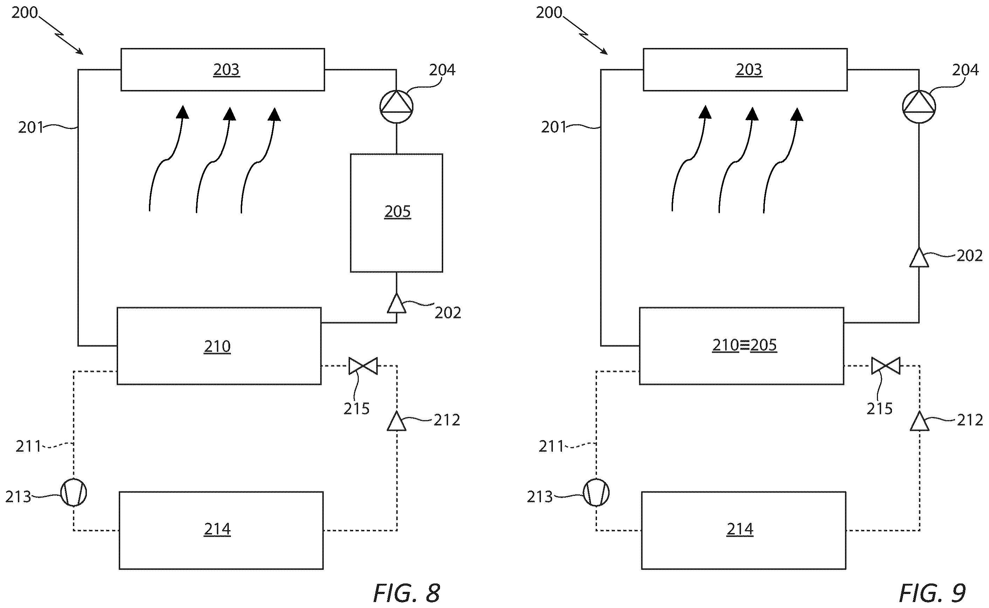

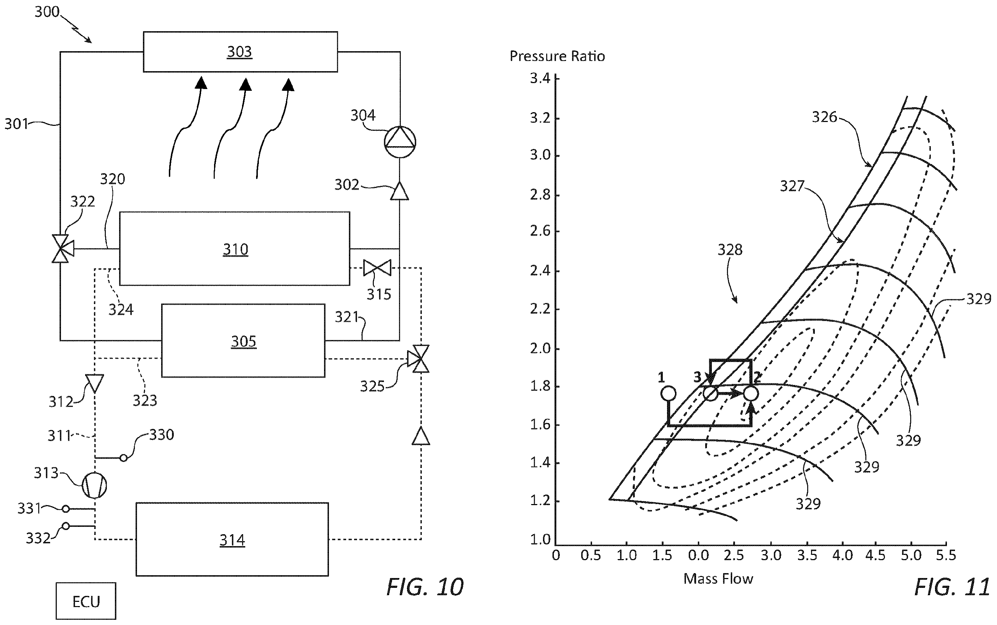

The motor vehicle 1 comprises one of the conditioning apparatuses 100 (Figures 6, 7), 200 (Figures 8, 9), 300 (Figure 10) for conditioning the passenger compartment and/or the devices U.

The apparatus 100 comprises a conditioning circuit 101 configured to cyclically circulate a conditioning fluid or refrigerant fluid, in particular a cooling fluid and more in particular a conditioning liquid or a cooling liquid, for example water, possibly with the addition of an additive, such as glycol, i.e. an aqueous solution or an aqueous compound, along a path 102 in a closed loop or more simply closed.

In particular, the circuit 101 comprises a pump 104 to put the cooling liquid in circulation along the path 102.

In other words, the cooling liquid circulates through the circuit 101 along the path 102 cyclically, i.e. by repeating the path 102 several times, more precisely without ever exiting from the circuit 101, at least ideally, i.e. unless there are micro-leaks in the circuit 101 or other problems associated with maintenance or malfunctions of the circuit 101, or even unless there are intentional replenishments or replacements of the cooling liquid.

The circuit 101 comprises on the path 102 a heat exchanger, or more specifically a radiator 103 to expose the cooling liquid to a heat exchange with another conditioning fluid or refrigerant fluid external to the circuit 101, in this case a gas, in particular air, more in particular coming from outside the motor vehicle 1.

Here, the cooling liquid transfers heat to the air passing through the radiator 103, and thus cools. The radiator 103 therefore serves to cool or more generally to condition the cooling liquid.

The circuit 101 comprises on the path 102 one or more zones or points arranged in series or in parallel with each other, wherein the cooling liquid enters respectively into thermal contact with the devices U, which are therefore arranged to enter into thermal contact with the cooling liquid at the respective points.

Furthermore, the circuit 101 comprises on the path 102 a heat exchanger 105 comprising a material confined in a closed thermodynamic system or more simply in a closed volume, arranged to enter into thermal contact with the cooling liquid, and adapted to switch between a solid phase and a liquid phase only when the temperature of the cooling liquid in thermal contact with the material satisfies a relationship with a phase change threshold.

In particular, the material switches from the solid phase to the liquid phase (liquefies) or vice versa (solidifies) when the temperature of the cooling liquid exceeds or is lower than the phase change threshold, respectively.

In this manner, the phase switch of the material results in a heat exchange between the material and the cooling liquid based on a latent heat of the material.

In practice, the material is more precisely a phase change material.

In the embodiment of Figures 6 and 7, the heat exchanger 105 is arranged downstream of the radiator 103 according to the path 101.

More in particular, in the variant of Figure 6, the heat exchanger 105 is arranged in series with respect to the radiator 103.

In the variant of Figure 7, the circuit 101 comprises a main branch 106 and a heat exchange branch 107 arranged in parallel with each other. The heat exchange branch 107 comprises the heat exchanger 105; in other words, the heat exchanger 105 is positioned at the heat exchange branch 107.

Once again with reference to the variant of Figure 7, the circuit 101 comprises a valve device 108 controllable to selectively admit and prevent a passage of the cooling liquid through the heat exchange branch 107. In other words, the valve device 108 is controllable to selectively open and close the heat exchange branch 107 to passage of the cooling liquid. When the heat exchange branch 107 is closed, the valve device 108 prevents passage of the cooling liquid through the heat exchange branch 107, so all the cooling liquid passes through the main branch 106. Vice versa, the cooling liquid passes at least in part through the heat exchange branch 107 and therefore through the exchanger 105 when passage of the cooling liquid is admitted by the valve device 108 or the heat exchange branch 107 is opened by the valve device 108.

When the cooling liquid is admitted through the heat exchange branch 107 (open), the valve device 108 can be controlled to divide the cooling liquid between the main branch 106 and the heat exchange branch 107, or to prevent the passage of the cooling liquid through the main branch 106, so that all the cooling liquid passes through the heat exchange branch 107.

Here, for simplicity, the valve device 108 is depicted as a three-way valve arranged at a node formed by the branches 106, 107 upstream of the heat exchanger 105. However, the three-way valve of Figure 7 is only a non-limiting example, since the valve device 108 can be constructed in many ways, for example by means of a plurality of valves arranged at the branches 106, 107, in order to perform the functions described here above.

In the embodiment of Figures 6 and 7, the phase change material liquefies, i.e., it switches from the solid phase to the liquid phase, when the temperature of the cooling liquid passing through the heat exchanger 105 exceeds the phase change threshold. By liquefying, the phase change material subtracts heat from the cooling liquid, thus cooling the cooling liquid.

For example, in the embodiment of Figures 6 and 7, the phase change material could comprise or consist of a paraffin, a salt hydrate or a sugar alcohol.

In the embodiment of Figures 6 and 7, for example, the temperature of the cooling liquid can vary substantially between 60° and 90°.

The heat exchanger 105 contributes with the radiator 103 in cooling of the cooling liquid in cases of peak thermal loads, i.e., when the devices U generate peaks in heat transferred to the cooling liquid.

According to variants not shown, the heat exchanger 105 can be arranged upstream of the radiator 103 and downstream of the thermal contact points between the cooling liquid and the devices U.

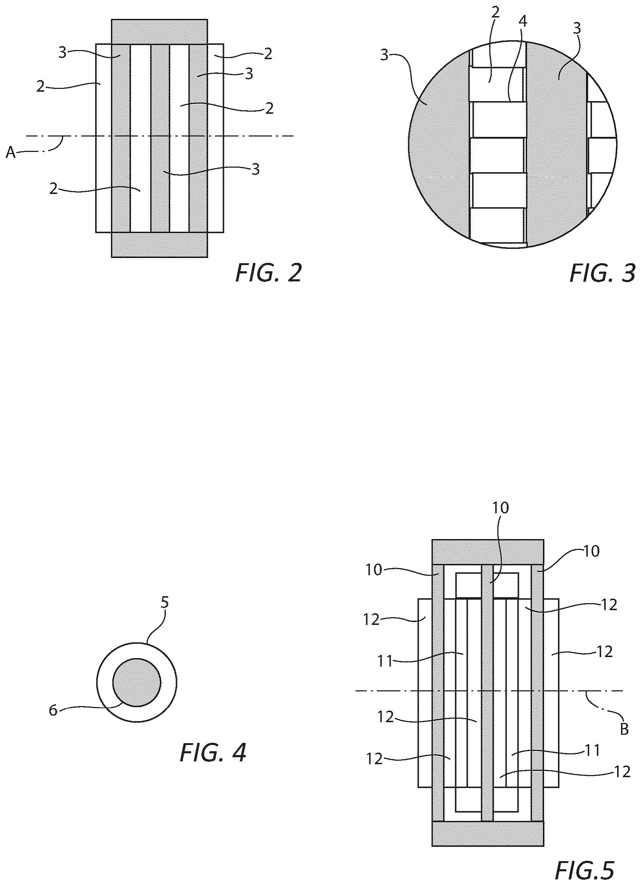

The heat exchanger 105 can, for example, be constructed according to the diagram of Figure 2, where the phase change material is divided into a plurality of layers 2 stacked on each other in a straight direction A and interspersed with layer-shaped conduits 3 for passage of the cooling liquid along the path 102.

As visible in Figure 3, a plurality of fins 4 can extend externally to the conduits 3 from the walls that define the conduits 3, so as to sink into the phase change material, i.e., into the layers 2, in order to increase the thermal exchange area between the cooling liquid and the phase change material.

Alternatively, as in Figure 4, the heat exchanger 105 could comprise two concentric tubes 5, 6, so as to define a first internal volume in the innermost of the tubes 5, 6, and a second volume defined radially with each other, where one between the first and the second volume defines a conduit for the cooling liquid, whereas the other contains the phase change material.

The apparatus 200 comprises a conditioning circuit 201 that is similar to the circuit 101, in that it cyclically circulates a conditioning fluid or a refrigerant fluid, for example water, possibly with the addition of an additive, such as glycol, along a path 202 in a closed loop, or more simply closed. In particular but not necessarily, the refrigerant fluid can be a cooling liquid or a conditioning liquid.

The conditioning circuit 201 comprises components similar to the ones of the circuit 101, so such components will be described solely in what distinguishes them from the corresponding ones and will be indicated, where possible, with a reference number with one hundred added with respect to the corresponding ones.

The circuit 201 comprises along the path 202 an evaporator 210 that also forms part of a further cooling circuit 211 configured to circulate a further conditioning fluid or refrigerant fluid (which, specifically, changes phase during its circulation in the circuit 201) cyclically along a path 212 in a closed loop.

The further refrigerant fluid, which specifically changes phase in the circuit 201, will be identified more simply below as the refrigerant.

The evaporator 210 is therefore arranged along the path 212, which is preferably distinct and separate from the circuit 201, so the refrigerant and the cooling liquid exchange heat reciprocally at the evaporator 210, but specifically do not mix with each other.

In other words, the respective sections of the circuits 201, 211 at the evaporator 210 are in thermal contact with each other.

In detail, the refrigerant evaporates on entering into thermal contact with the cooling liquid at the evaporator 210, so the cooling liquid transfers heat to the refrigerant, and thus cools.

With reference to the variants of Figures 8 and 9, the heat exchanger 205, corresponding with or similar to the heat exchanger 105 of the circuit 101, is arranged along the path 202 upstream of the radiator 203, corresponding with or similar to the radiator 103 of the circuit 101. Furthermore, in particular, the pump 204 corresponds with or is similar to the pump 104 of the circuit 101.

In the variant of Figure 8, the heat exchanger 205 is arranged along the path 202 downstream of the evaporator 210.

In the variant of Figure 9, the heat exchanger 205 is integrated into the evaporator 210. In other words, the heat exchanger 205 integrated into the evaporator 210 defines more generally a thermal exchange unit configured to put the phase change material, the cooling liquid and the refrigerant in thermal contact with each other. In more detail, the thermal exchange unit defines one or more first conduits 10 forming part of the circuit 201 for the cooling liquid and one or more second conduits 11 forming part of the circuit 211, where the first and the second conduits 10, 11 pass through the phase change material or are surrounded by the phase change material. In this manner, the triple thermal exchange between the phase change material, the cooling liquid and the refrigerant can occur.

For example, Figure 5 schematically shows a possible construction of the heat exchanger 205, where the conduits 10, 11 are interspersed with each other and with layers 12 of the phase change material. In particular, the layers 12 and the conduits 10, 11 (having a layer shape) are stacked on each other in an alternating manner in a straight direction B. More in particular, each of the conduits 10, 11 is located between two layers 12 in the straight direction B.

In the embodiment of Figures 8 and 9, the phase change material solidifies, i.e., it switches from the liquid phase to the solid phase, when the temperature of the cooling liquid passing through the heat exchanger 205 is lower than the phase change threshold. By solidifying, the phase change material transfers heat to the cooling liquid, thus heating the cooling liquid.

Then, when the phase change material is in the solid phase, said material liquefies when the temperature of the cooling liquid passing through the exchanger 205 exceeds the phase change threshold. By liquefying, the phase change material subtracts heat from the cooling liquid, thus providing extra refrigeration to the cooling liquid, in addition to the one obtained by passing through the evaporator 210.

For example, in the embodiment of Figures 8 and 9, the phase change material could comprise or consist of a water, a saline solution or a paraffin.

In the embodiment of Figures 8 and 9, for example, the temperature of the cooling liquid can vary substantially between -5° and 20°.

The radiator 203 can be used to condition the passenger compartment or more generally an environment of the motor vehicle 1. In other words, the radiator 203 exposes the cooling liquid to a thermal exchange with the air in the passenger compartment. Here, the cooling liquid passing through the radiator 103 subtracts heat from the air in the passenger compartment, and thus heats up.

The radiator 203 is not essential, so it could be absent in the embodiment of Figures 8 and 9.

The circuit 211 passing through the evaporator 210 is configured so as to obtain a refrigerating cycle, in particular a Kelvin refrigeration cycle or compression type one, so the circuit 211 comprises along its path 212
- a compressor 213 configured to compress the refrigerant,
- a condenser 214 arranged downstream of the compressor 213 and configured to condense the refrigerant compressed by the compressor 213 through thermal exchange with another fluid, for example air or a cooling liquid conveyed through the condenser 214,
- at least one expansion valve or throttling valve 215 arranged downstream of the condenser 214 and configured to generate a pressure drop in the refrigerant condensed by the condenser 214, and
- the evaporator 210 arranged downstream of the expansion valve 215, in particular immediately or directly, and configured to evaporate the refrigerant passed through the expansion valve 215 by means of thermal exchange with the cooling liquid of the circuit 201, thus subtracting heat from said cooling liquid.

The devices U can also be arranged here in thermal contact with the cooling liquid at the respective points or zones of the circuit 201 downstream of the heat exchanger 205. The points could preferably be arranged upstream of the radiator 203 or downstream of it.

The apparatus 300 is similar to the apparatus 200, so it will be described solely in what distinguishes it from the apparatus 200. Where possible, the same reference numbers increased by one hundred will be used to indicate similar components to those of the apparatus 200.

In the apparatus 300, the circuit 301 (corresponding with or similar to the circuit 201 of the apparatus 200) could be absent and, for example, replaced by a controllable device for heating the phase exchange material of the heat exchanger 305 (corresponding with or similar to the heat exchanger 205 of the apparatus 200), in particular when the phase change material solidifies completely, i.e. switches from the liquid phase to the solid phase, so as to liquefy the phase change material, i.e. cause the switch from the solid phase to the liquid phase.

In practice, as will be explained more clearly below, the circuit 301 could have the function of causing liquefaction of the phase change material after the latter has solidified completely.

In contrast with the circuit 201, the circuit 301 has two branches 320, 321 in parallel with each other and respectively passing through the evaporator 310 (corresponding with or similar to the evaporator 210 of the apparatus 200) and the heat exchanger 305, so that the cooling liquid can exchange heat respectively with the refrigerant and the phase change material.

An example of construction of the heat exchanger 305 can be the one depicted in Figure 5, not described again here for the sake of brevity.

Furthermore, the circuit 301 comprises a valve device 322 controllable to selectively admit and prevent a passage of the cooling liquid through the branch 321, so that it respectively may or may not cross the heat exchanger 305. The valve device 322, as for the valve device 108, is depicted schematically in Figure 10 as a three-way valve, but this is merely a non-limiting example. The same comments already made for the valve device 108, in terms of function and structure, therefore apply.

Like the circuit 201, the circuit 310 comprises the radiator 303 (corresponding with or similar to the radiator 203) and preferably the pump 304 (corresponding with or similar to the pump 204) along the path 302 (corresponding with or similar to the path 202).

The circuit 311, like the circuit 211 of the apparatus 200, comprises the compressor 313, the condenser 314, the expansion valve 315, and the evaporator 310 (corresponding with the components of the refrigerating cycle of the circuit 211), along the path 312 thereof.

In contrast with the specific circuit 211, the circuit 311 comprises two branches 323, 324 arranged in parallel with each other and comprising or passing through respectively the heat exchanger 305 and the unit defined by the expansion valve 315 and the evaporator 310.

Furthermore, the circuit 311 comprises a valve device 325 controllable to selectively admit and prevent a passage of the refrigerant through the branch 323, and therefore through the heat exchanger 305. The same comments made on the valve devices 108, 322, in terms of structure and function, apply for the valve device 325.

In more detail, the apparatus 300 comprises a control unit ECU configured to determine an onset of a surge state or a condition close to surge of the compressor 313.

More precisely, the surge state or condition close to surge of the compressor 313 is defined by a zone or space (algebraic) or domain 328 on a map, in particular two-dimensional, so a Cartesian plane, of (i.e. defined by) two of the following operating dimensions of the compressor 313: flow rate processed by the compressor, compression ratio of the compressor 313 (ratio between the pressure downstream and upstream of the compressor 313), and temperature of the refrigerant, in particular at the outlet of the compressor 313.

More precisely, the surge state zone is defined by a boundary 326, also called the surge line, on the map. The surge occurs in the surge state, corresponding with a zone 328 of the map where the flow rate is relatively low, whereas the temperature and the compression ratio are relatively high.

The condition close to surge zone is also defined by a relative boundary 327, located in a zone of the map where (qualitatively) the flow rate is a little higher, whereas the temperature and the compression ratio are a little lower than the surge line (boundary 326).

Figure 11 shows an example of the map, where the axes of the map, which in particular define the Cartesian plane, are respectively defined by the flow rate and by the compression rate. Further lines 329 on the map identify points of the map with identical temperature. On the map of Figure 11, the boundary 327 is more to the right of the boundary 326. The zone 328 is to the left of the boundary 326 or 327.

Consequently, when two of the three operating dimensions mentioned define a point on the map inside the zone 328 defined by the boundary 326 or 327, the surge state or the condition close to surge occurs or arises and can be determined by the control unit ECU.

In particular, the control unit ECU can determine the onset of the surge state or the condition close to surge by extracting information on two of the three operating dimensions mentioned from signals measured by transducers 330, 331, 332 of the apparatus 300 and indicative of said two operating dimensions.

For example, the transducers 330, 331 are configured to measure signals indicative of the pressure upstream and downstream of the compressor 313, so that the control unit ECU can determine the compression ratio from the information extracted from the signals.

Independently, the transducer 332 is configured to measure a signal indicative of the temperature, in particular at the outlet of the compressor 313. For example, the pair of transducers 330, 331 or the transducer 332 can be replaced by a flow meter or more generally by a transducer configured to measure a signal indicative of the flow rate.

The control unit ECU uses the information extracted to check whether the operating point of the compressor 313 defined by the values of the two operating dimensions falls within the zone 328 and, if it does, determines the onset of the surge state or the condition close to surge.

The control unit ECU is configured to perform a first control on the valve device 325 to admit the passage of the refrigerant through the branch 323, and therefore through the heat exchanger 305 when the onset of the surge state or the condition close to surge is determined, i.e. in response to determination of the onset itself.

Otherwise, the control unit ECU controls the valve device 325 to prevent the passage of the refrigerant through the branch 323, i.e. to prevent the refrigerant from reaching (even in part) the heat exchanger 305.

In particular, the first control commands the valve device 325 to divide the refrigerant between the evaporator 310 and the exchanger 305, i.e. between the branches 323, 324.

In this manner, the phase change material of the heat exchanger 305 solidifies by transferring heat to the portion of the refrigerant passing through the heat exchanger 305.

Therefore, overall, the refrigerant upstream of the compressor 313 is heated. In other words, the heat exchanger 305 represents an additional thermal load on the circuit 311, in particular with the branch 323 open to the passage of part of the refrigerant.

This ensures that the pressure of the refrigerant upstream of the compressor 313 increases.

As normally occurs for all conditioning circuits that perform a refrigerating cycle, the flow rate (or speed) of the compressor 313 is regulated by the control unit ECU in a closed loop, based on the difference in pressure between the effective pressure of the refrigerant upstream of the compressor 313 (for example, determined by the information extracted from the signal measured by the transducer 330) and an objective input pressure, for example constant. For example, the flow rate can be regulated proportionately (in particular according to a law of proportional-integral control, proportional-derivative control, or proportional-integral-derivative control) to the difference in pressure.

Therefore, as a result of heating of the refrigerant upstream of the compressor 313, the flow rate of the compressor 313 increases, so that the compressor 313 moves away from the surge state (passage from point 1 to point 2 in Figure 11, depicted schematically by an arrow).

When the phase change material completes its solidification, the material itself stops transferring heat to the refrigerant, so the compressor 313 once again starts moving towards the condition close to surge (passage from point 2 to point 3 in Figure 11, depicted schematically by an arrow).

Preferably, the control unit ECU is configured to determine completion of solidification of the phase change material during the first control.

This can occur in many ways, for example by extracting information from a signal indicative of a temperature of the phase change material, for example measured by a specific temperature sensor of the apparatus 300, or indirectly from the information extracted on the operating dimensions of the compressor 313, i.e. when the control unit ECU determines an approach on the map of the operating condition of the compressor 313 towards the surge state or the condition close to surge.

In fact, the control unit ECU can, for example, determine a decrease in the flow rate, an increase in the compression ratio, and/or an increase in the temperature of the refrigerant during or after the first control, which is indicative of completion of solidification of the phase change material.

The control unit ECU conveniently performs a further control of the valve device 322 to prevent passage of the cooling liquid through the branch 321, i.e. through the heat exchanger 305, during the first control, so that the cooling liquid does not heat the phase change material, preventing the solidification thereof.

After determining completion of solidification or in response to it, the control unit ECU performs a further control on the valve device 325 to prevent the passage of the refrigerant through the branch 323, and a further control of the valve device 322 to admit the passage of the cooling liquid through the branch 321, i.e. through the heat exchanger 305.

In particular, the control unit ECU controls the valve device 322 so that the cooling liquid is divided between the evaporator 310 and the exchanger 305, i.e. between the branches 320, 321.

In this manner, the portion of cooling liquid that passes through the exchanger 305 transfers heat to the phase change material, causing the liquefaction thereof.

Thus, the first control can be repeated when the compressor 313 reaches the condition close to surge or the surge state.

At the same time, the cooling liquid receives an extra cooling due to liquefaction of the phase change material, which constitutes a benefit on cooling or condition of the environment (in particular the passenger compartment of the motor vehicle 1) through the radiator 303, despite the compressor 313 approaching the surge state, thus causing a lesser cooling of the cooling liquid by means of the evaporator 310.

The advantage with respect to the prior art is considerable.

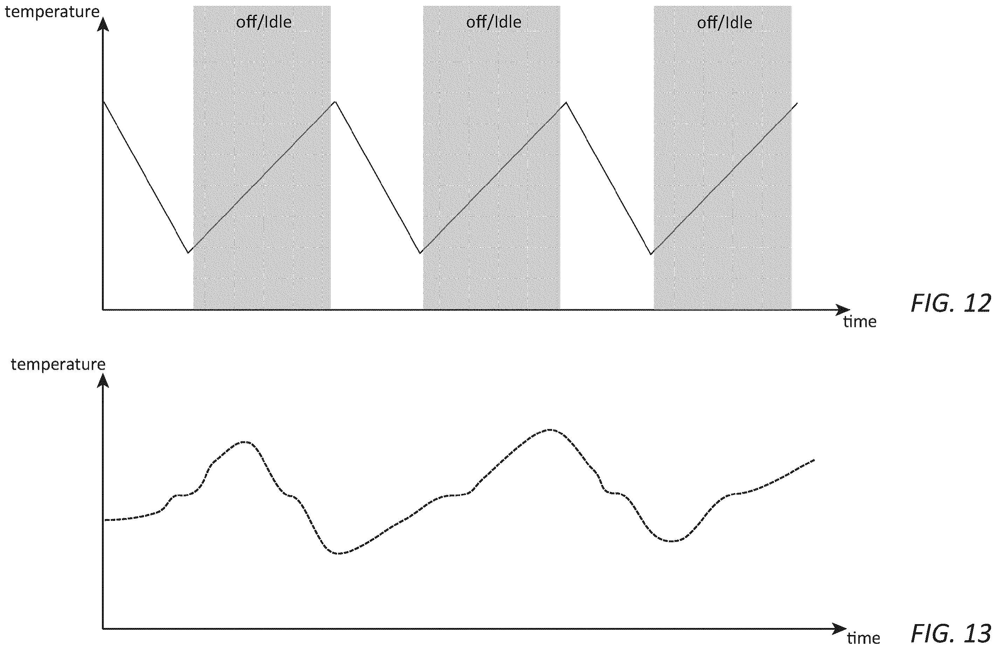

In fact, Figure 12 shows an example of a time trend of a temperature of the environment cooled by means of the radiator 303 in the implementation of a strategy, according to which the compressor 313 is switched off and switched on at regular time intervals when it operates in the condition close to surge. As visible in Figure 12, the temperature of the environment has a substantially sawtooth-shaped profile, i.e. with abrupt changes that represent a drawback.

On the other hand, with cyclical application of the first control, as visible in Figure 13, the temperature of the environment has less abrupt changes, thanks to operation of the heat exchanger 305 on the cooling liquid.

The benefits of the motor vehicle 1 according to the invention are clear from the above.

Each of the apparatuses 100, 200, 300, includes a heat exchanger with a phase change material that acts substantially as a latent heat tank, which can be exploited by means of the phase change to manage peak thermal loads or to provide extra cooling to the cooling liquid when the refrigeration cycle operates in suboptimal conditions, for example low load conditions.

In conclusion, it is clear that changes and variants can be made to the motor vehicle 1 according to the invention without thus deviating from the scope of protection as defined by the claims.

In particular, each of the devices depicted schematically in the drawings is independent from the other details.

Furthermore, the embodiments described and illustrated are combinable with each other in an arbitrary manner to form further embodiments.

In conclusion, the expressions cooling liquid and refrigerant have been used in the description for the purpose of clarity, in order to distinguish the conditioning fluids or refrigerant fluids from each other, but it is clear that the cooling liquid can always be replaced with a more generic refrigerant fluid or conditioning fluid. Similarly, the term radiator can be more generically replaced throughout the description with a generic heat exchanger. Even more similarly, the term refrigerant fluid can be replaced throughout the description with the term conditioning fluid.

Thus, expressions such as cool, cooling and similar can be replaced with respective more generic expressions, such as condition, conditioning and similar.

In the specific examples described, the cooling liquid preferably does not change phase, i.e. it always remains liquid, in the circuit in which it circulates.

## Claims

1. Motor vehicle (1) comprising a first conditioning circuit (101, 201, 311) configured to cyclically circulate a first conditioning fluid along a first path (102, 202, 312) in a closed loop, the first conditioning circuit (101, 201, 311) comprising on the first path (102, 202, 312)
- a first heat exchanger (103, 210, 310) configured to expose the first conditioning fluid to a first heat exchange with a second conditioning fluid external to the first conditioning circuit (101, 201, 311), and
- a second heat exchanger (105, 205, 305) arranged, for example, downstream of or in parallel with the first heat exchanger or in an integrated manner with the first heat exchanger, and comprising a material confined in a closed thermodynamic system, arranged to make thermal contact with the first conditioning fluid and adapted to switch between a solid phase and a liquid phase only when a temperature of the first conditioning fluid in thermal contact with the material satisfies a relationship with a phase change threshold, thus resulting in a second heat exchange between the material and the first conditioning fluid based on a latent heat of the material.

2. The motor vehicle according to claim 1, comprising one or more devices (U) configured to generate heat during operation thereof and arranged to make thermal contact with the first conditioning fluid at respective points of the first conditioning circuit (101) downstream of the second heat exchanger (105) and upstream of the first heat exchanger (103), the second heat exchanger (105) being in turn arranged downstream of the first heat exchanger (103).

3. The motor vehicle according to claim 2, wherein the first heat exchanger (103) is defined by a radiator to condition the first conditioning fluid via the first heat exchange, wherein the second conditioning fluid is preferably defined by an airflow from outside the motor vehicle (1).

4. The motor vehicle according to any one of claims 1 to 3, wherein the first conditioning circuit (101) comprises a main branch (106) arranged in parallel with a heat exchange branch (107) comprising the second heat exchanger (105), the first conditioning circuit (101) further comprising a valve device (108) controllable to selectively admit and prevent a passage of the first conditioning fluid through the heat exchange branch (107).

5. The motor vehicle according to claim 1, further comprising a second conditioning circuit (211) configured to cyclically circulate the second conditioning fluid along a second path (212) in a closed loop passing through the first heat exchanger (210) and configured to implement a refrigeration cycle, the second conditioning circuit (211) further comprising along the second path (212)
- a compressor (213) configured to compress the second conditioning fluid,
- a condenser (214) configured to condense the second conditioning fluid compressed by the compressor (213) via a third heat exchange with a further fluid,
- at least one expansion valve (215) configured to ingenerate a pressure drop on the second conditioning fluid condensed by the condenser (214), thus resulting in a cooling thereof, and
- an evaporator defined by the first heat exchanger (210) and configured to evaporate the second conditioning fluid passed through the expansion valve (215) by the first heat exchange, thus subtracting heat from the first conditioning fluid.

6. The motor vehicle according to claim 5, comprising one or more devices (U) configured to generate heat during their operation and arranged to come into thermal contact with the first conditioning fluid at respective points of the first conditioning circuit (201) downstream of the second heat exchanger (205) and upstream of a radiator (203) to condition an environment of the motor vehicle (1) after passing through said points.

7. The motor vehicle according to claim 1, wherein the first conditioning circuit (311) is configured to implement a refrigeration cycle, whereby comprising on the first path (312)
- a compressor (313) configured to compress the first conditioning fluid,
- a condenser (314) configured to condense the first conditioning fluid compressed by the compressor (313) via a third heat exchange with a further fluid,
- at least one expansion valve (315) configured to ingenerate a pressure drop on the first conditioning fluid condensed by the condenser (314), thus resulting in a cooling thereof, and
- an evaporator defined by the first heat exchanger (310) and configured to evaporate the first conditioning fluid passed through the expansion valve (315) via the first heat exchange, thus subtracting heat from the second conditioning fluid,
wherein the first conditioning circuit (311) comprises a first and a second branch (323, 324) arranged in parallel with each other along the first path (312) and respectively comprising the second heat exchanger (305) and the assembly defined by the evaporator and the expansion valve (315), whereby the first conditioning circuit further comprises a first valve device (325) controllable to selectively admit and prevent a passage of the first conditioning fluid through the first branch (323).

8. The vehicle according to claim 7, further comprising a control unit (ECU) configured to
- determine an onset of a surge state or a condition close to compressor surge (313), and
- perform a first control of the first valve device (325) to admit the passage of the first conditioning fluid through the first branch (323) when the onset of the surge state or said condition is determined.

9. The vehicle according to claim 7 or 8, further comprising a second conditioning circuit (301) configured to cyclically circulate the second conditioning fluid along a second path (302) in a closed loop passing through the first heat exchanger (310), the second conditioning circuit comprising
- a radiator (303) downstream of the first heat exchanger (310) to condition an environment of the motor vehicle (1) after passing through the first heat exchanger (310),
- a third and a fourth branch (320, 321) arranged in parallel with each other and respectively passing through the first and second heat exchangers (310, 305), so that the second conditioning fluid can exchange heat with the first conditioning fluid and said material, respectively, and
- a second valve device (322) controllable to selectively admit and prevent a passage of the second conditioning fluid through the fourth branch (321).

10. The motor vehicle according to claim 9, when dependent on claim 8, wherein the control unit (ECU) is further configured to
- perform a fourth control of the second valve device (322) to prevent the passage of the second conditioning fluid through the fourth branch (321) during the first control,
- determine the completion of a solidification of said material during the first control, and
- perform a second control of the first valve device (325) to prevent the passage of the first conditioning fluid through the first branch (323) after solidification is determined, and
- perform a third control of the second valve device (322) to admit the passage of the second conditioning fluid through the fourth branch (321) after solidification is determined.
